Europäisches Patentamt

European Patent Office

Office européen des brevets

(19)

(11) Numéro de publication: **0 263 907**
**A1**

(12) **DEMANDE DE BREVET EUROPEEN**

(21) Numéro de dépôt: **86430039.7**

(22) Date de dépôt: **17.10.86**

(51) Int. Cl.4: **G06F 13/36** , H04L 5/00

(43) Date de publication de la demande:
**20.04.88 Bulletin 88/16**

(84) Etats contractants désignés:
**DE FR GB**

(71) Demandeur: **International Business Machines Corporation**
**Old Orchard Road**
**Armonk, N.Y. 10504(US)**

(72) Inventeur: **Epenoy, Gabriel**
**734 Chemin des Salles**
**F-06140 Vence(FR)**
Inventeur: **Sergent, Bernard**
**"Le Raphael" Bat. A 106, Route de Cagnes**
**Vence(FR)**
Inventeur: **Spagnol, Victor**
**12bis Chemin des Collettes Villa**
**Bienville-Semalle**
**F-06800 Cagnes Sur Mer(FR)**

(74) Mandataire: **Bonneau, Gérard**
**Compagnie IBM France Département de Propriété Intellectuelle**
**F-06610 La Gaude(FR)**

(54) **Dispositif de traitement parallèle des signaux de commande dans un modem fanin/fanout.**

(57) Dispositif de traitement parallèle des signaux de commande dans un modem du type fanin/fanout comportant un registre d'interface (2) associé à chaque terminal (DTE) destiné à charger des bits représentant des signaux de commande entrants et des signaux de commande sortants, un registre de signal de commande entrant (4) dont le contenu est formé par les bits provenant de chacun des registres d'interface (2) pour le signal de commande entrant, et un registre de signal de commande sortant (10) dont le contenu est formé par les bits représentant un signal de commande sortant et obtenus après traitement parallèle par un moyen de traitement (6) des bits contenus dans ledit registre de signal de commande entrant (4), le contenu du registre de commande sortant (10) étant transféré dans les registres d'interface après réception d'un signal d'autorisation fourni par le processeur du modem.

FIG.1

## DISPOSITIF DE TRAITEMENT PARALLELE DES SIGNAUX DE COMMANDE DANS UN MODEM FANIN/FANOUT

L'invention concerne les modems fanin/fanout, et plus particulièrement un dispositif de traitement parallèle des signaux de commande dans un modem fanin/fanout.

Dans la transmission de données entre un premier équipement terminal de données ou DTE et un second DTE au moyen de lignes téléphoniques, chaque DTE est équipé d'un modem où le signal porteur est modulé par les données dans un modulateur côté émission et démodulé dans un démodulateur côté réception.

Lorsque la transmission de données s'effectue entre un DTE local et plusieurs DTE éloignés, ces derniers sont souvent connectés selon une configuration multipoint, c'est-à-dire connectés en parallèle à une unique ligne de transmission en provenance du DTE local. Dans une telle configuration, il est évident qu'on a intérêt à disposer d'un seul modem pour plusieurs DTE au lieu d'un modem par DTE. Dans ce but, deux possibilités existent dans la technique actuelle: soit le modem dispose d'un multiplexeur, soit le modem est équipé d'un dispositif de distribution parallèle dit de "fanin/fanout".

Le multiplexeur permet au modem d'être connecté à plusieurs DTE qui reçoivent ou transmettent les données selon le principe du multiplexage dans le temps. C'est-à-dire que chaque multiplet de données qui transite sur la ligne unique de transmission, est formé de la juxtaposition de groupes de bits en provenance ou à destination de chaque DTE, le nombre de bits dans chaque groupe dépendant de la vitesse de transmission attribuée au DTE correspondant.

Dans la technique, de distribution parallèle dite "fanin/fanout", le modem est également connecté à plusieurs DTE, mais il n'y a pas multiplexage des données. Lorsque des données en provenance du modem local, sont reçues par le modem, elles sont transmises simultanément à tous les DTE qui lui sont connectés. Dans l'autre sens de transmission, contrairement au multiplexage, chaque DTE transmet ses données à tour de rôle. Pour ce faire, il demande à transmettre un message de données en envoyant au modem un signal de requête de transmission (RTS). Si aucun DTE n'est en cours de transmission, le modem renvoie alors au DTE un signal d'acceptation de transmission (RFS) qui indique au DTE qu'il peut procéder à la transmission de son message.

Généralement, il existe une procédure d'appel des DTE par laquelle le système demande à tour de rôle à chaque DTE s'il a des données à transmettre. Si c'est le cas, ce dernier engage la procédure de transmission par l'envoi au modem du signal RTS. Mais cette procédure dite de "polling" est contraignante dans la mesure où chaque DTE est obligé d'attendre qu'il soit appelé par le modem. En outre, par suite de défaillance, il peut ariver qu'un DTE envoie un signal RTS alors qu'il n'a pas été appelé. Ceci peut conduire à la transmission simultanée de données par deux DTE sur la ligne unique de transmission, et par conséquent leur perte irrémédiable.

On a donc pensé à permettre à chaque DTE d'envoyer son signal RTS au modem sans qu'une procédure d'appel soit lancée. Ce signal est chargé dans un registre d'interface spécifique au DTE est se trouvant dans le modem. Comme plusieurs DTE peuvent envoyer leur signal RTS en même temps, le processeur de signaux du modem effectue de façon répétitive une procédure de balayage de chaque registre d'interface de DTE permettant ensuite au processeur d'attribuer la ligne de transmission au DTE qui la demande dans la mesure où un autre DTE n'est pas entrain de transmettre. Une telle procédure, mettant en jeu une routine du logiciel de commande du processeur, présente l'inconvénient de consommer beaucoup de temps de traitement, dans la mesure où la routine de balayage doit être répétée pour chaque registre d'interface de DTE et ceci à chaque temps baud.

L'objet de l'invention est donc un dispositif de traitement parallèle des signaux de commande, et en particulier des signaux de requête de transmission (RTS), dans un modem du type fanin/fanout, évitant ainsi d'avoir à répéter la même procédure de traitement pour chaque DTE connecté au modem.

Le dispositif selon l'invention comprend un registre d'interface associé à chaque DTE, destiné à charger des bits représentant des signaux de commande entrants et des signaux de commande sortants pour le DTE associé; un registre de signal de commande entrant dont le contenu est un mot formé par les bits en provenance de chacun des registres d'interface et représentant le signal de commande entrant; un registre de signal de commande sortant dont le contenu est un mot formé par les bits représentant chacun le signal de commande sortant pour chaque DTE; le processeur de signaux du modem comprenant des moyens de commande qui fournissent le mot chargé dans le registre de signal de commande sortant en réponse au mot se trouvant dans le registre de signal de commande entrant, et des moyens d'autorisation pour autoriser le transfert des bits formant le mot chargé dans le registre de signal de commande sortant dans les registres d'interface associés aux DTE.

L'invention va maintenant être décrite en détail dans le cas d'une réalisation particulière, en référence aux dessins suivants où :

la figure 1 est un schéma fonctionnel du dispositif selon l'invention

la figure 2 montre une réalisation possible du circuit de décodage et priorité de la figure 1

la figure 3 représente une caractéristique additionnelle de l'invention du circuit de décodage et priorité de la figure 2.

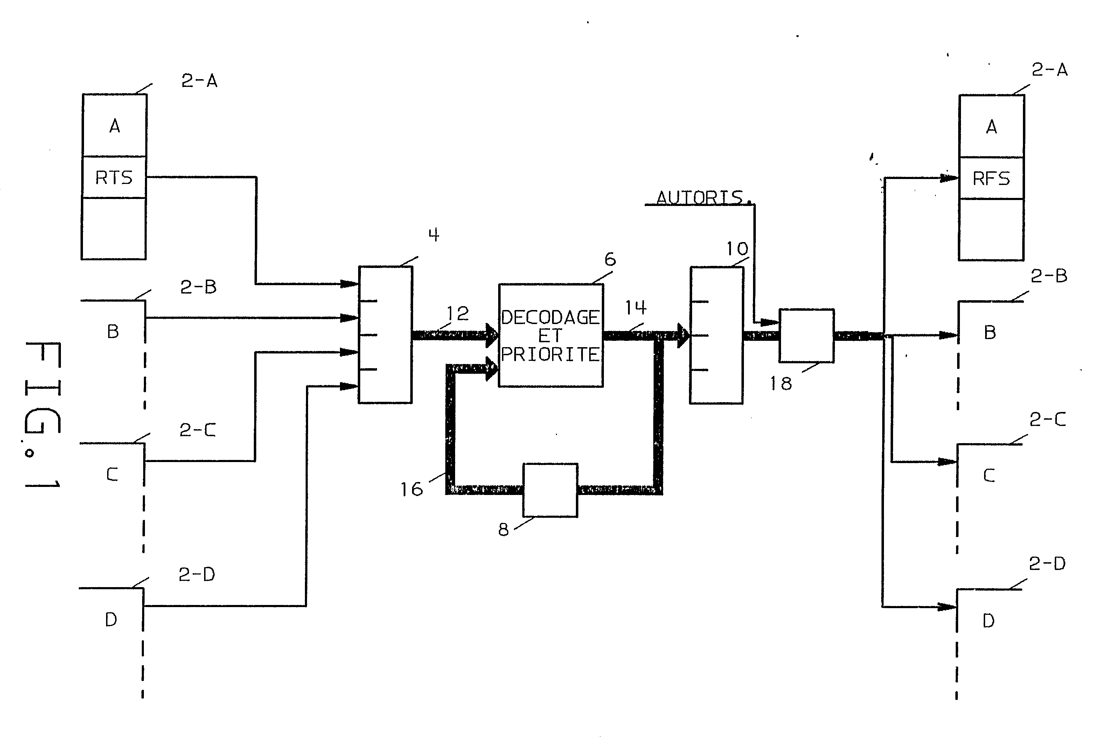

En référence à la figure 1, l'invention va maintenant être décrite en considérant le traitement des signaux de commande permettant à un équipement terminal de données appelé ci-après DTE, relié au modem à distribution parallèle dit du type "fanin/fanout", de pouvoir transmettre ses données sur la ligne unique de transmission reliée au modem.

Dans l'exemple illustré dans la figure 1, le modem est connecté à 4 DTE qui sont identifiés par les lettres A, B, C et D. Le modem comporte donc 4 registres d'interface: 2-A, 2-B, 2-C et 2-D respectivement associés aux DTE A, B, C et D non représentés sur la figure.

Chaque registre d'interface enregistre des bits correspondant à des signaux de commande dit entrants lorsqu'ils proviennent du DTE, et des bits correspondant à des signaux de commande dits sortants lorsqu'ils sont à destination du DTE.

Lorsqu'un DTE, par exemple A, désire transmettre des données il active le signal de commande de requête de transmission (RTS) et un bit "1" est chargé dans la position RTS du registre d'interface 2-A du modem. Au même temps baud, il est possible que un ou plusieurs des autres DTE désirent transmettre des données et des bits "1" sont également chargés dans la position RTS du ou des registres d'interface associés.

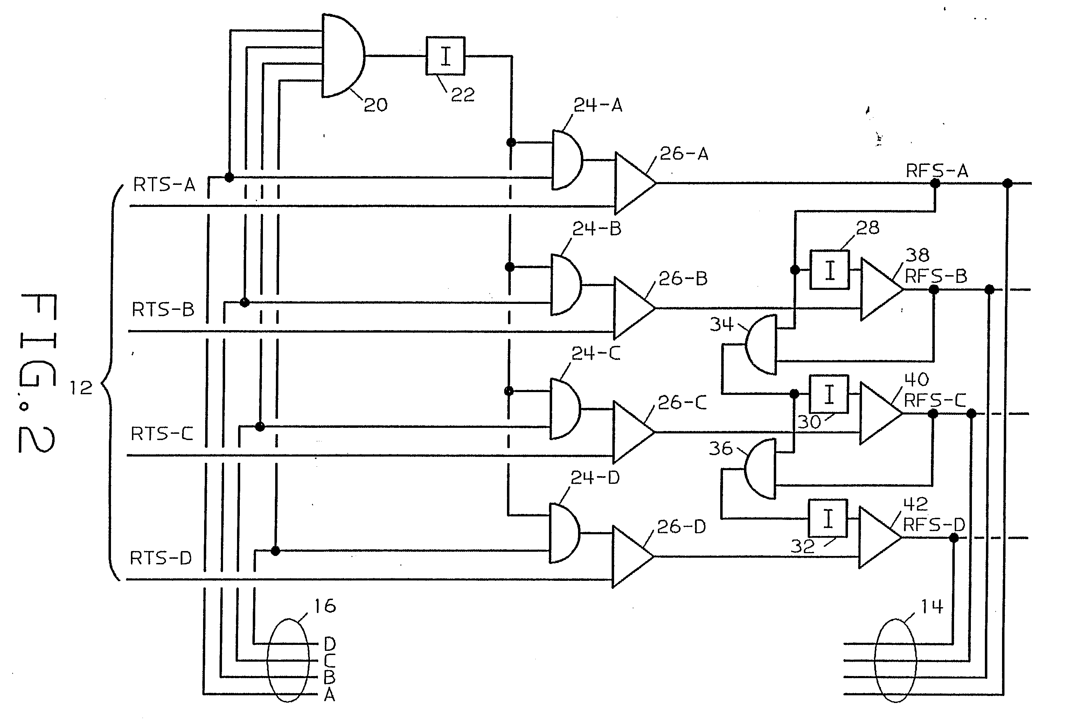

A chaque temps baud, l'ensemble des bits RTS des registres d'interface de DTE qui forme un mot de 4 bits est chargé dans le registre RTS 4. Ce mot est transmis par le bus 12 vers le bloc 6 de décodage et priorité. Le bloc 6 reçoit également en entrée le bus 16 qui fournit un mot de 4 bits formé des bits de sortie au temps baud précédent, du bloc de décodage et priorité 6 sur le bus 14, après retard d'un temps baud par le circuit à retard 8. Le bloc de décodage et priorité a pour fonction de traiter en parallèle, à chaque temps baud, le mot se trouvant dans le registre RTS, pour fournir un mot formé de 4 bits également représentant chacun le signal d'acceptation de transmission (RFS) pour le DTE correspondant, ceci en tenant compte d'un certain nombre de paramètres tels que le respect d'un ordre de priorité parmi les DTE ou bien la non-interruption d'une transmission en cours. Un tel bloc peut être réalisé en logiciel se trouvant dans la mémoire du processeur de signaux du modem, ou bien sous forme de circuit comme on le verra en liaison avec la figure 2.

Le mot fourni par le bloc 6 formé des 4 bits représentant le signal de commande sortant RFS pour chaque DTE, est alors chargé dans le registre RFS 10.

Enfin, un signal d'autorisation fourni par le processeur du modem conditionne (ou non) la porte ET 18 pour permettre au contenu du registre 10 d'être chargé dans les positions RFS des registres d'interface DTE 2-A à 2-D.

L'autorisation qui permet de rendre passante la porte ET 18 a pour but de laisser le temps au modem d'initialiser la transmission. En effet, lorsque l'un des DTE demande à transmettre et active son signal RTS, alors qu'aucun DTE n'occupe la ligne, le modem déclenche la procédure d'émission de la séquence d'initialisation qui précède tout transfert de données. Cette séquence d'initialisation doit avoir une durée minimum permettant au modem récepteur d'être prêt (par exemple adapter son égaliseur) à recevoir les données qui suivent. Ce n'est que lorsque cette durée minimum s'est écoulée que le processeur délivre le signal d'autorisation à la porte ET 18 à chaque temps baud, et il en est ainsi tant que dure cette transmission.

Le circuit de décode et priorité de la figure 2 va maintenant être décrit. Comme on l'a vu précédemment, à chaque temps baud, un mot de 4 bits se trouve chargé dans le registre RTS 4 de la figure 1. Les bits du registre sont transférés sur les lignes RTS-A à D formant le bus 12 de la figure 1. Au même temps baud, les 4 bits RFS du temps baud précédent sont présents sur les 4 lignes formant le bus 16.

Si aucun DTE n'était en cours de transmission au temps baud précédent, les 4 lignes du bus 16 ne sont pas actives. En supposant que deux DTE demandent l'autorisation de transmettre (par exemple A et B), les 2 lignes RTS-A et RTS-B du bus 12 sont actives. Toutes les entrées du circuit OU 20 étant à "zéro", sa sortie est à "zéro" et la sortie de l'inverseur 22 est donc active. Les circuits OU 24-A à D fournissent donc un "un" en sortie. Mais seules, les portes ET 26-A et 26-B ont leurs deux entrées à "un" puisque les lignes RTS-A et RTS-B sont actives. Les portes 26-A et 26-B fournissent donc un "un" en sortie.

Arrivé à ce point, il est bon de préciser qu'une seule requête de transmission peut être prise en compte, à un moment donné, puisque tous les DTE partagent la même ligne de transmission. Il faut donc une priorité entre les DTE. Le circuit de la figure 2 est construit de telle sorte que A a priorité sur B, qui a priorité sur C, qui a priorité sur D. Mais il va de soi qu'une autre priorité que celle-ci aurait pu être prise en compte.

Donc, la sortie de la porte 26-A étant active, elle est inversée par l'inverseur 28 qui fournit un "zéro" à l'entrée de la porte ET 38. En conséquence, la porte 38 est bloquée et ne permet pas au signal RTS-B d'être transmis plus avant. On remarquera que la sortie active de la porte 26-A fournit également, par le circuit OU 34 et l'inverseur 30 d'une part, et par le circuit OU 36 et l'inverseur 32 d'autre part, le blocage des portes ET 40 et ET 42, ce qui inhiberait également les sorties des portes 26-C et 26-D si elles étaient à "un" à la suite de l'activation des lignes RTS-C et RTS-D. On voit donc que seule la ligne RFS-A du bus 14 est active lorsque A demande à transmettre, quelles que soient les demandes des autres DTE B, C ou D.

Si le DTE B demande à transmettre sans que A le demande, la sortie de la porte 26-A est à "zéro" alors que la sortie de la porte 26-B est à "un". De ce fait, la sortie de l'inverseur 28 est à "un" ce qui rend passante la porte ET 38 et laisse passer le signal "un" présent à la sortie de la porte 26-B. La sortie RFS-B de la porte 38 est donc active, ce qui inhibe par l'intermédiaire des inverseurs 30 et 32, les deux portes ET 40 et 42 et en conséquence l'activation éventuelle des lignes RFS-C et RFS-D.

En reprenant l'hypothèse où le DTE A a demandé à transmettre et maintient la ligne RTS-A active, la ligne RFS-A est active, et par voie de conséquence la ligne 16-A du bus 16 est active pendant tout le temps que dure l'activation de la ligne RTS-A et ceci à partir du deuxième temps baud. La sortie du circuit OU 20 est donc à "un" et l'inverseur 22 fournit un "zéro" aux entrées des circuits OU 24-A à D. Comme la ligne 16-A est active et que les lignes 16-B, 16-C et 16-D sont inactives, seule la porte 26-A est débloquée puisque le circuit OU 24-A a son entrée 16A qui est à "un". La porte 26-A laisse passer le signal "un" de la ligne RTS-A, et rend active la ligne de sortie RFS-A.

Pendant tout le temps où le DTE A maintient actif son RTS, c'est-à-dire est soit en procédure d'obtention de la ligne lorsque le modem procède à l'émission de la séquence d'initialisation, soit en procédure de transmission, l'inverseur 22 fournit un "zéro" en sortie qui inhibe les portes 26 B, C, et D, comme on l'a vu précédemment, de sorte que l'activation d'une ou plusieurs des autres lignes RTS n'est pas prise en compte. Ceci s'applique également au cas où un autre DTE que A est en procédure de transmission (son RTS est actif). En résumé, l'activation d'une ligne RTS, pendant plus d'un temps baud, inhibe l'activation éventuelle des autres lignes RTS, sans considération de la priorité affectée aux DTE.

Lorsque A cesse de transmettre, la ligne RTS-A devient inactiv. Mais, comme elle était active au temps baud précédent, la ligne 16-A du bus 16 est active, et l'entrée des portes 26-B, 26-C, 26-D qui est la sortie de l'inverseur 22, est à "zéro" comme on l'a vu précédemment. Ces portes sont donc toujours bloquées. Comme la ligne RTS-A est inactive, la sortie de la porte 26-A est également inactive. Par conséquent, aucune des lignes RFS-A à D n'est active pendant le premier temps baud qui suit une période au cours de laquelle un DTE était entrain de transmettre, même si un DTE a demandé à transmettre en rendant son RTS actif pendant ce temps baud. Ce temps baud de transition est nécessaire pour permettre au modem de terminer la transmission précédente avant de procéder à l'émission d'une nouvelle séquence d'initialisation précédent une nouvelle transmission par un autre DTE.

Il se peut qu'une condition supplémentaire soit prise en compte en même temps que le signal de commande entrant tel que RTS. Dans ce cas, la condition est enregistrée dans une position du registre d'interface du DTE de la même façon que les signaux de commande.

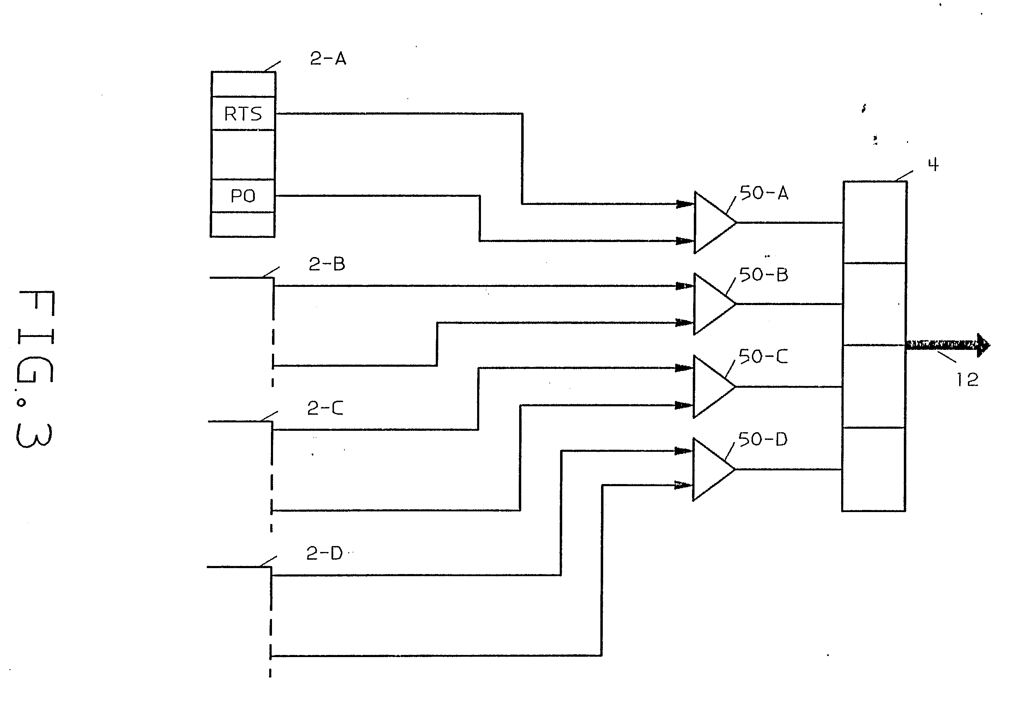

La figure 3 montre la réalisation matérielle prenant en compte la condition que le DTE est bien alimenté (PO). Dans ce cas une position de chacun des registres d'interface 2-A à 2-D contient un bit PO qui prend la valeur "1" si le DTE est alimenté correctement et "0" dans le cas contraire. Lorsque par exemple, le bit PO du DTE A est à "zéro" indiquant que ce terminal n'est pas capable de transmettre bien que son bit RTS soit actif, ce dernier bit ne pourra pas être transféré dans le registre 4 puisque le circuit ET 50-A est bloqué. De la même façon les circuits ET 50-B, 50-C, 50-D sont respectivement bloqués par les bits à "zéro" des DTE B, C et D associés, empêchant ainsi le transfert des signaux RTS correspondants.

En référence aux figures 2 et 3, l'invention a été illustrée en considérant le cas des signaux de requête de transmission RTS comme signaux de commande entrants et des signaux d'acceptation de transmission comme signaux de commande sortants. Mais il va de soi que l'invention n'est pas limitée à ce seul cas. Ainsi, les signaux de commande entrants pourraient être des signaux de demande d'exécution de tests.

Dans ce cas, le traitement parallèle effectué par le processeur de signaux serait différent de celui des signaux RTS. Ce traitement réalisé à l'aide de circuits logiques nécessiterait un arrangement différent de celui illustré par les figures 2 et 3 puisque répondant à d'autres paramètres et conditions que le traitement des signaux de requête de transmission. Le mot de sortie serait formé alors de signaux d'acceptation de test. Contrairement aux signaux d'acceptation de transmission RFS où un seul des 4 bits est à "un" puisqu'un seul DTE peut transmettre des données à un moment donné sur la ligne unique de transmission, il pourrait y avoir plusieurs bits d'acceptation de test égaux à "un" dans le mot de sortie, plusieurs des DTE pouvant réaliser leur test simultanément.

Par conséquent, bien que l'invention ait été décrite en détail pour le cas particulier des signaux de commande de transmission, il est clair qu'elle peut être utilisée pour d'autres cas de signaux de commande dans un modem du type fanin/fanout, une des caractéristiques essentielles étant le traitement parallèle d'un mot formé par les bits représentant un signal de commande entrant pour chaque DTE, de façon à fournir un mot formé par les bits représentant un signal de commande sortant pour chaque DTE, étant entendu que ce traitement parallèle peut être mis en oeuvre soit par du matériel, soit par un logiciel de commande du processeur de signaux.

## Revendications

1. Dispositif de traitement parallèle des signaux de commande dans un modem fanin/fanout connecté d'une part à une ligne unique de transmission et d'autre part à une pluralité d'équipements terminaux de données (DTE), ledit modem comprenant un processeur de signaux pour traiter les signaux de commande comprenant des signaux de commande entrants en provenance des DTE et des signaux de commande sortants, à destination des DTE; ledit dispositif étant caractérisé en ce que :
-il comprend :
un registre d'interface (2) associé à chaque DTE destiné à charger des bits représentant lesdits signaux de commande entrants et de commande sortants pour le DTE associé,
un registre de signal de commande entrant (4) dont le contenu est un mct commande entrant formé par les bits en provenance de chacun des dits registres d'interface et représentant un signal de commande entrant, et
un registre de signal de commande sortant (10) dont le contenu est un mot de commande sortant formé par les bits représentant un signal de commande sortant pour chaque DTE
-ledit processeur de signaux comprend :
des moyens de traitement parallèle (6) qui fournissent ledit mot de commande sortant audit registre de signal de commande sortant en réponse audit mot de commande entrant contenu dans ledit registre de signal de commande entrant, et
des moyens d'autorisation (18) pour autoriser le transfert des bits formant ledit mot de commande sortant dudit registre de signal de commande sortant dans lesdits registres d'interface associés auxdits DTE.

2. Dispositif selon la revendication 1 dans lequel lesdits moyens de traitement parallèle (6) sont réalisés sous forme d'un logiciel de commande dudit processeur de signaux.

3. Dispositif selon la revendication 1 dans lequel lesdits moyens de traitement parallèle (6) sont réalisés sous forme d'un arrangement de circuits logiques (figure 2).

4. Dispositif selon la revendication 3 comportant en outre des portes ET (50) ne permettant le chargement des bits représentant ledit signal de commande entrant dans ledit registre de signal de commande entrant (6) que lorsque'au moins une condition est remplie pour chacun desdits DTE.

5. Dispositif selon l'une quelconque des revendications 1 à 4 dans lequel ledit signal de commande entrant est le signal de requête de transmission (RTS), et ledit signal de commande sortant est le signal d'acceptation de transmission (RFS), ledit mot de commande sortant ne comportant au plus qu'un seul bit actif.

6. Dispositif selon l'une quelconque des revendications 1 à 4 dans lequel ledit signal de commande entrant est un signal de demande d'exécution de test, et ledit signal de commande sortant est un signal d'acceptation de test, ledit mot de commande sortant pouvant comporter plus d'un bit actif.

FIG. 1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROC. IEE, vol. 123, no. 10, octobre 1976, pages 961-966; D.J.KINNIMENT et al.: "Synchronisation and arbitration circuits in digital systems" * Page 961, lignes 62-68; page 965, lignes 27-38; figure 11 * | 1,3 | G 06 F 13/36 H 04 L 5/00 |
| | --- | | |
| A | US-A-4 040 014 (GEHRKING) * Colonne 2, lignes 28-37; colonne 3, lignes 24-32; figure 1 * | 1,3,5 | |
| | --- | | |
| A | US-A-4 016 539 (NANYA) * Colonne 3, ligne 59 - colonne 4, ligne 9; colonne 4, lignes 34-41; figures 1,3 * | 1,3 | DOMAINES TECHNIQUES RECHERCHES (Int. Cl.4) |
| | --- | | |
| A | US-A-4 536 839 (SHAH et al.) * Colonne 2, lignes 18-23; colonne 3, lignes 13-31 * | 1,4 | G 06 F 13/36 G 06 F 13/18 G 06 F 13/14 H 04 L 5/00 |
| | ----- | | |

Le présent rapport de recherche a été établi pour toutes les revendications

| Lieu de la recherche | Date d'achèvement de la recherche | Examinateur |
|---|---|---|
| LA HAYE | 13-05-1987 | GUINGALE A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82